# FASCICULE DE BREVET EUROPEEN

(11) **EP 3 560 052 B1**
(45) Date de publication et mention de la délivrance du brevet: **14.10.2020**
(21) Numéro de dépôt: 17828954.2
(22) Date de dépôt: 18.12.2017
(51) Int. Cl.: H02B 5/01, H01H 85/00, H01H 85/20, H01H 85/24, H01R 4/66

(54) **FAUX FUSIBLE**
DUMMY-SICHERUNG
DUMMY FUSE

(30) Priorité: 20.12.2016 FR 1662827
(43) Date de publication de la demande: 30.10.2019
(73) Titulaire: Fameca, 68170 Rixheim (FR)
(72) Inventeur: CONSTANS, Christian, 68510 Waltenheim (FR)
(74) Mandataire: Cabinet Bleger-Rhein-Poupon
(86) Numéro de dépôt international: PCT/FR2017/053635
(87) Numéro de publication internationale: WO 2018/115669

(56) Documents cités:
- AT-B- 327 310
- DE-B- 1 765 241
- DE-U1- 29 708 800
- Aktywizacja: "U-WBM EARTHING DEVICE OF POWER FUSE BASES WITH REPALCEABLE CARTRIDGES ELECTRICAL POWER SAFETY EQUIPMENT FACTORY", Technical Inf. (+48), 2 novembre 2015 (2015-11-02), pages 1-5, XP055381108, Extrait de l'Internet: URL:http://www.aktywizacja.com.pl/en/syste m/files/dokumenty_do_pobrania/catalogue U-WBM_english_(I edition - 10.2015).pdf [extrait le 2017-06-13]

## Description

La présente invention a trait à un faux fusible destiné à coopérer avec un bornier d'une armoire électrique.

Cette invention concerne le domaine de la fabrication des dispositifs de sécurité utilisés dans le cadre d'une intervention sur une installation électrique, plus particulièrement le domaine de la fabrication des dispositifs configurés pour assurer la mise à la terre d'une armoire électrique raccordée à une telle installation électrique. Cette invention trouvera une application particulièrement appropriée lorsqu'il s'agit de mettre à la terre une armoire électrique basse tension, notamment que comporte un poste de transformation, de distribution ou de répartition de courant.

Une telle armoire électrique est raccordée, d'une part, à un réseau d'alimentation en énergie électrique et, d'autre part, à une installation comportant au moins une machine et/ou au moins un appareil alimenté en énergie électrique par cette armoire électrique.

Une telle armoire électrique comporte une pluralité de borniers comportant, chacun, d'une part, une borne d'entrée raccordée au réseau d'alimentation en énergie électrique et, d'autre part, une borne de sortie raccordée à l'installation à alimenter en énergie électrique.

Un tel bornier est configuré pour recevoir un fusible comportant, d'une part, un premier connecteur destiné à coopérer avec la borne d'entrée de ce bornier et, d'autre part, un deuxième connecteur destiné à coopérer avec la borne de sortie de ce bornier. En fait, un tel fusible est enclenché à l'intérieur d'un tel bornier, plus particulièrement par engagement du premier connecteur à l'intérieur de la borne d'entrée et du deuxième connecteur à l'intérieur de la borne de sortie.

Dans le cadre d'une intervention, notamment de maintenance ou de réparation, sur une installation électrique raccordée à une telle armoire électrique, il convient de couper l'alimentation en énergie électrique de cette armoire électrique et de mettre à la terre cette armoire électrique.

Pour mettre à la terre cette armoire électrique, on remplace chaque fusible par un faux fusible raccordé à la terre. En fait, un tel faux fusible comporte, d'une part, un connecteur conducteur, réalisé en un matériau conducteur électrique, et destiné à coopérer avec la borne d'entrée du bornier de l'armoire électrique et, d'autre part, un connecteur isolant, réalisé en un matériau isolant, et destiné à coopérer avec la borne de sortie du bornier de l'armoire électrique et, d'autre part encore, des moyens de réception, réalisés en un matériau conducteur électrique, reliés électriquement au connecteur conducteur, et configurés pour recevoir des moyens de raccordement pour raccorder le faux fusible à la terre.

A ce propos, on observera qu'un tel faux fusible adopte une configuration sensiblement symétrique de sorte qu'un opérateur, en charge de la mise à la terre de l'armoire électrique, est susceptible de positionner un tel faux fusible de manière inappropriée au sein de l'armoire électrique, notamment par inadvertance. En particulier, cet opérateur est susceptible d'engager le connecteur conducteur dans la borne de sortie du bornier et le conducteur isolant dans la borne d'entrée du bornier. Même si le faux fusible est raccordé à la terre, une telle disposition ne permet pas de mettre l'armoire électrique à la terre de manière appropriée de sorte qu'il en découle un risque d'électrocution de l'opérateur ce qui n'est pas acceptable.

Par le document DE 17 65 241, on connait un faux fusible destiné à coopérer avec un bornier d'une armoire électrique. Ce faux fusible comporte un connecteur conducteur, destiné à coopérer avec une borne du bornier de l'armoire électrique, et comportant au moins une portion conductrice réalisée en un matériau conducteur électrique et une portion isolante. Ce faux fusible comporte, encore, un connecteur isolant, réalisé en un matériau isolant électrique, destiné à coopérer avec une autre borne du bornier de l'armoire électrique. Ce faux fusible comporte, aussi, des moyens de réception, réalisés en un matériau conducteur électrique, reliés électriquement à la portion conductrice du connecteur conducteur, et configurés pour recevoir des moyens de raccordement pour raccorder le faux fusible à la terre. Ce faux fusible comporte, de plus, d'une part, un détrompeur sous forme d'un coulisseau de blocage, configuré pour empêcher la coopération entre la portion conductrice du connecteur conducteur du faux fusible et le bornier et, d'autre part, des moyens de montage en déplacement pour monter le détrompeur en déplacement entre au moins une position active du détrompeur dans laquelle ce détrompeur empêche la coopération de la portion conductrice du connecteur conducteur avec le bornier et au moins une position inactive du détrompeur dans laquelle ce détrompeur autorise la coopération de la portion conductrice du connecteur conducteur avec le bornier. Ce faux fusible comporte, aussi, intérieurement, une bobine, traversée par le coulisseau, et raccordée aux moyens de réception ainsi qu'à un élément de contact que comporte le connecteur conducteur pour, en cas de raccordement de ces moyens de réception à la terre et en cas de contact de cet élément de contact avec une borne sous tension, entraîner le déplacement du détrompeur d'une position inactive à une position active. Ce faux fusible présente une structure complexe (notamment avec un connecteur conducteur comportant une portion conductrice, une portion isolante, un élément de contact, une rainure à l'intérieur de laquelle coulisse le coulisseau), un nombre important de pièces (dont une bobine et des moyens pour son raccordement électrique), et nécessite, pour que le détrompeur adopte une position active, que le faux fusible soit raccordé à la terre et que la borne du bornier soit sous tension. De plus, ce faux fusible ne permet pas d'empêcher un opérateur, en charge de la mise à la terre de l'armoire électrique, de positionner un tel faux fusible de manière inappropriée au sein de l'armoire électrique, notamment par inadvertance. En particulier, ce faux fusible ne permet pas d'empêcher cet opérateur d'engager le connecteur conducteur dans la borne de sortie du bornier et le conducteur isolant dans la borne d'entrée du bornier.

La présente invention se veut de remédier aux inconvénients des faux fusibles de l'état de la technique.

A cet effet, l'invention concerne un faux fusible, destiné à coopérer avec un bornier d'une armoire électrique, et comportant :
- un connecteur conducteur, réalisé en un matériau conducteur électrique, destiné à coopérer avec une borne (notamment une borne d'entrée) du bornier de l'armoire électrique ;
- un connecteur isolant, réalisé en un matériau isolant électrique, destiné à coopérer avec une autre borne (notamment une borne de sortie) du bornier de l'armoire électrique ;
- des moyens de réception, réalisés en un matériau conducteur électrique, et configurés pour recevoir des moyens de raccordement pour raccorder le faux fusible à la terre ;
- des moyens de liaison pour relier électriquement le connecteur conducteur et les moyens de réception ;
- un détrompeur configuré pour empêcher la coopération entre le faux fusible et le bornier ;
- des moyens de montage en déplacement pour monter le détrompeur en déplacement entre, d'une part, au moins une position active du détrompeur dans laquelle ce détrompeur empêche la coopération du faux fusible avec le bornier et, d'autre part, au moins une position inactive du détrompeur dans laquelle ce détrompeur autorise la coopération du faux fusible avec le bornier.

Ce faux fusible est caractérisé par le fait qu'il comporte des moyens d'entraînement pour entraîner le détrompeur en déplacement entre au moins la position inactive et au moins la position active, respectivement entre au moins la position active et au moins la position inactive, de ce détrompeur, ceci sous l'effet de la gravité.

Une autre caractéristique consiste en ce que les moyens de montage en déplacement comportent des moyens de montage en coulissement du détrompeur par rapport au connecteur conducteur ou (et de préférence) au connecteur isolant.

Une caractéristique alternative ou (et de préférence) additionnelle consiste en ce que les moyens de montage en déplacement comportent des moyens de montage en basculement du détrompeur par rapport au connecteur conducteur ou (et de préférence) au connecteur isolant.

Ainsi, le faux fusible comporte un détrompeur configuré pour empêcher la coopération entre le faux fusible et le bornier de l'armoire électrique. Ce détrompeur adopte, d'une part, une position active dans laquelle ce détrompeur empêche la coopération du faux fusible avec le bornier et, d'autre part, une position inactive du détrompeur dans laquelle ce détrompeur autorise la coopération du faux fusible avec le bornier.

En fait, dans sa position active, ce détrompeur empêche la coopération entre le faux fusible et le bornier de l'armoire électrique, plus particulièrement lorsque ce faux fusible est positionné de manière inappropriée par rapport au bornier, en particulier lorsque le connecteur isolant de ce faux fusible est en face de la borne d'entrée du bornier de l'armoire électrique et lorsque le connecteur conducteur est en face de la borne de sortie de ce bornier. Ainsi, dans sa position active, ce détrompeur évite, avantageusement et lorsque le faux fusible adopte une position inappropriée par rapport au bornier, une coopération de ce faux fusible avec ce bornier qui pourrait donner l'illusion que l'armoire électrique est mise à la terre alors qu'il n'en est rien.

En particulier, dans sa position active, ce détrompeur empêche la coopération entre le connecteur isolant de ce faux fusible et la borne d'entrée du bornier de l'armoire. En empêchant une telle coopération, on évite, avantageusement, un positionnement inapproprié du faux fusible dans une position qui ne permet pas, en cas d'alimentation malencontreuse en énergie électrique de l'armoire électrique, d'assurer une mise à la terre de cette armoire électrique et de garantir la sécurité des opérateurs et de leur entourage.

Au contraire, dans sa position inactive, ce détrompeur autorise la coopération entre le faux fusible et le bornier, plus particulièrement lorsque ce faux fusible est positionné de manière appropriée par rapport au bornier, en particulier lorsque le connecteur conducteur de ce faux fusible est en face de la borne d'entrée du bornier de l'armoire électrique et lorsque le connecteur isolant est en face de la borne de sortie de ce bornier. Ainsi, dans sa position inactive, ce détrompeur permet, avantageusement et lorsque le faux fusible adopte une position appropriée par rapport au bornier, une coopération de ce faux fusible avec ce bornier qui permet d'assurer une mise à la terre appropriée de l'armoire électrique.

En particulier, dans sa position inactive, ce détrompeur permet la coopération entre le connecteur conducteur de ce faux fusible et la borne d'entrée du bornier de l'armoire. En autorisant une telle coopération, on permet, avantageusement, un positionnement approprié du faux fusible dans une position qui permet, en cas d'alimentation malencontreuse en énergie électrique de l'armoire électrique, d'assurer une mise à la terre de cette armoire électrique et de garantir la sécurité des opérateurs et de leur entourage.

Une autre caractéristique consiste en ce que le faux fusible comporte des moyens d'entraînement pour entraîner le détrompeur en déplacement entre au moins la position inactive et au moins la position active, respectivement entre au moins la position active et au moins la position inactive, de ce détrompeur. Ces moyens d'entraînement en déplacement sont configurés pour assurer un tel entraînement sous l'effet de la gravité.

Cette caractéristique permet, avantageusement, d'assurer un déplacement du détrompeur et, donc, un positionnement de ce détrompeur dans une position (inactive ou active) appropriée (autorisant ou non une coopération entre le faux fusible et le bornier), ceci de manière automatique et sous l'effet de la gravité. En particulier, ces moyens d'entraînement permettent, avantageusement, un positionnement de ce détrompeur dans une position appropriée, ceci sous l'effet d'un positionnement approprié du faux fusible par rapport au bornier.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en perspective d'un faux fusible conforme à l'invention, ceci dans une position inactive du détrompeur dans laquelle ce détrompeur autorise une coopération de ce faux fusible avec un bornier ;
- la figure 2 est une vue similaire à la figure 1 et correspond au faux fusible conforme à l'invention, ceci dans une position active du détrompeur dans laquelle ce détrompeur empêche une coopération de ce faux fusible avec un bornier ;
- la figure 3 est une vue schématisée et de côté d'un faux fusible conforme à l'invention, ceci dans une position active du détrompeur dans laquelle ce détrompeur empêche une coopération de ce faux fusible avec un bornier et est bloqué par rapport à un connecteur de ce faux fusible ;
- la figure 4 est une vue schématisée et en perspective d'un ensemble comportant, d'une part, un bornier et, d'autre part, un faux fusible comportant un détrompeur, ceci en position inactive du détrompeur et de coopération du faux fusible avec le bornier ;
- la figure 5 est une vue schématisée en coupe longitudinale de l'ensemble illustré figure 4 ;
- la figure 6 est une vue similaire à la figure 4 et correspond à un ensemble comportant, d'une part, un bornier et, d'autre part, un faux fusible comportant un détrompeur, ceci en position active du détrompeur dans laquelle ce détrompeur empêche la coopération du faux fusible avec le bornier ;
- la figure 7 est une vue schématisée en coupe longitudinale de l'ensemble illustré figure 6 ;
- la figure 8 est une vue similaire aux figures 4 et 6 et correspond à un ensemble comportant, d'une part, un bornier et, d'autre part, un faux fusible comportant un détrompeur, ceci dans une autre position active du détrompeur dans laquelle ce détrompeur empêche la coopération du faux fusible avec le bornier et est bloqué par rapport à un connecteur de ce faux fusible ;
- la figure 9 est une vue schématisée en coupe longitudinale de l'ensemble illustré figure 8.

La présente invention concerne le domaine de la fabrication des dispositifs de sécurité utilisés dans le cadre d'une intervention (notamment de maintenance ou de réparation) sur une installation électrique, plus particulièrement le domaine de la fabrication des dispositifs configurés pour assurer la mise à la terre d'une armoire électrique raccordée à une telle installation électrique.

Une telle armoire électrique comporte une pluralité de borniers B comportant, chacun, d'une part, une borne d'entrée Be raccordée électriquement à un réseau d'alimentation en énergie électrique et, d'autre part, une borne de sortie Bs raccordée à une installation électrique à alimenter en énergie électrique.

Un tel bornier B est configuré pour recevoir un fusible (non représenté) comportant, d'une part, un premier connecteur destiné à coopérer avec la borne d'entrée Be de ce bornier B et, d'autre part, un deuxième connecteur destiné à coopérer avec la borne de sortie Bs de ce bornier B. En fait, un tel fusible est enclenché à l'intérieur d'un tel bornier B, plus particulièrement par engagement du premier connecteur à l'intérieur de la borne d'entrée Be et du deuxième connecteur à l'intérieur de la borne de sortie Bs.

En cas d'intervention sur une installation électrique (non représentée) raccordée à une telle armoire électrique, il convient de couper l'alimentation en énergie électrique de cette armoire électrique et de mettre à la terre cette armoire électrique. Une telle mise à la terre est opérée à l'aide d'un faux fusible 1.

L'invention concerne, alors, un faux fusible 1 destiné à coopérer avec un bornier d'une armoire électrique, ceci en vue de mettre à la terre cette armoire électrique.

Ce faux fusible 1 comporte un connecteur conducteur 2, réalisé en un matériau conducteur électrique, destiné à coopérer avec une borne du bornier B de l'armoire électrique, plus particulièrement avec la borne d'entrée Be de ce bornier B.

Ce faux fusible 1 comporte, encore, un connecteur isolant 3, réalisé en un matériau isolant électrique, destiné à coopérer avec une autre borne du bornier B de l'armoire électrique, plus particulièrement avec la borne de sortie Bs de ce bornier B.

Ce faux fusible 1 comporte, aussi, des moyens de réception 4, réalisés en un matériau conducteur électrique, et configurés pour recevoir des moyens de raccordement (non représentés) pour raccorder ce faux fusible 1 à la terre. En fait, ces moyens de réception 4 peuvent adopter la forme d'un orifice taraudé, notamment que comporte une douille que comporte ce faux fusible 1. Les moyens de raccordement peuvent comporter, d'une part, une perche comportant une extrémité proximale pourvue d'un organe fileté destiné à coopérer avec l'orifice taraudé des moyens de réception 4 ainsi qu'une extrémité distale et, d'autre part, un câble électrique présentant une extrémité proximale coopérant avec l'extrémité distale de ladite perche ainsi qu'une extrémité distale coopérant avec un système de mise à la terre.

Ce faux fusible 1 comporte, également, des moyens de liaison 5 pour relier électriquement le connecteur conducteur 2 et les moyens de réception 4.

Selon l'invention, le faux fusible 1 comporte un détrompeur 6 configuré pour empêcher la coopération entre ce faux fusible et le bornier B.

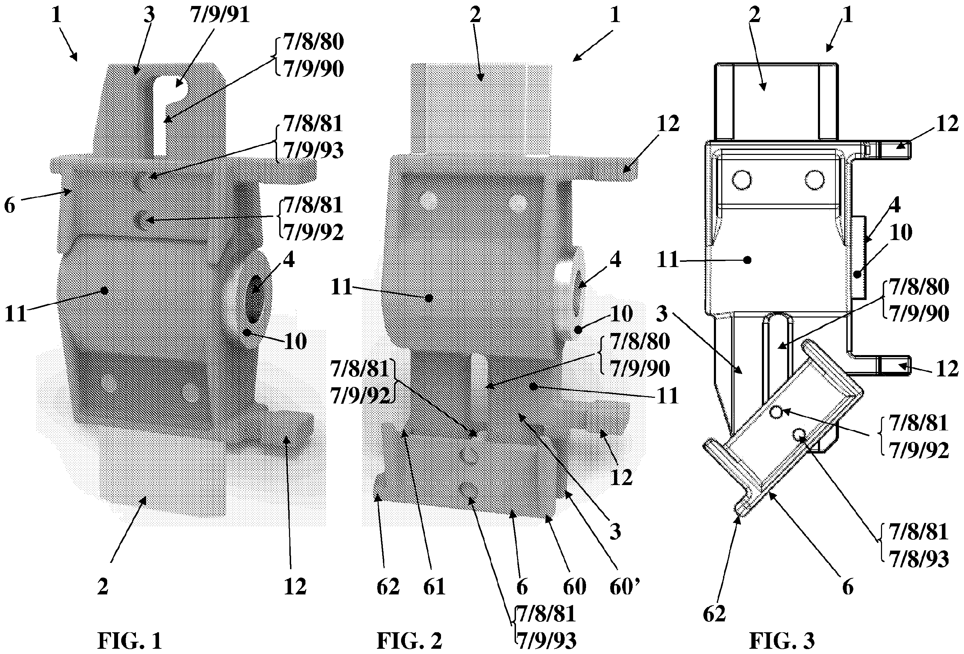

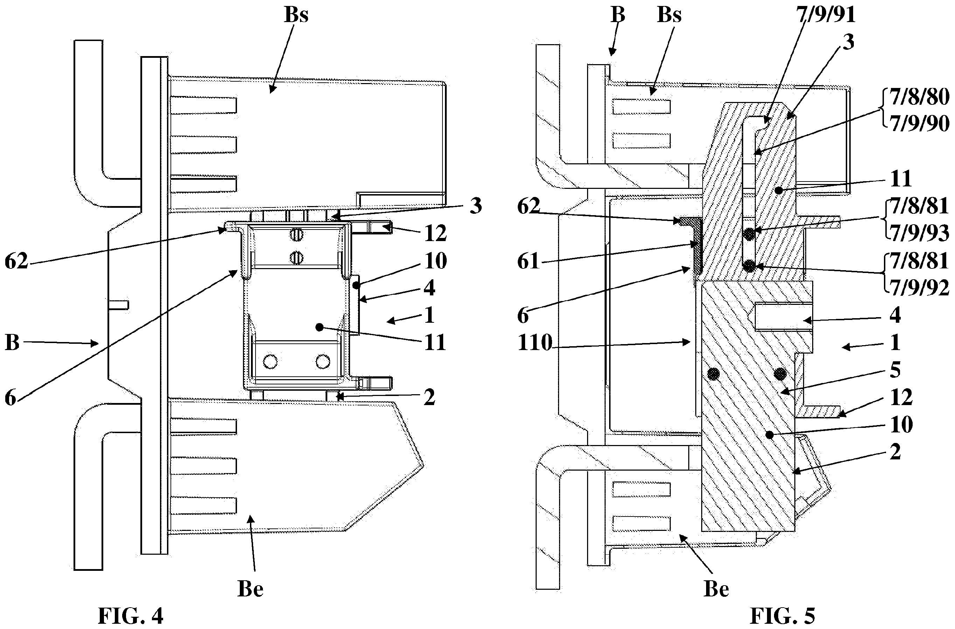

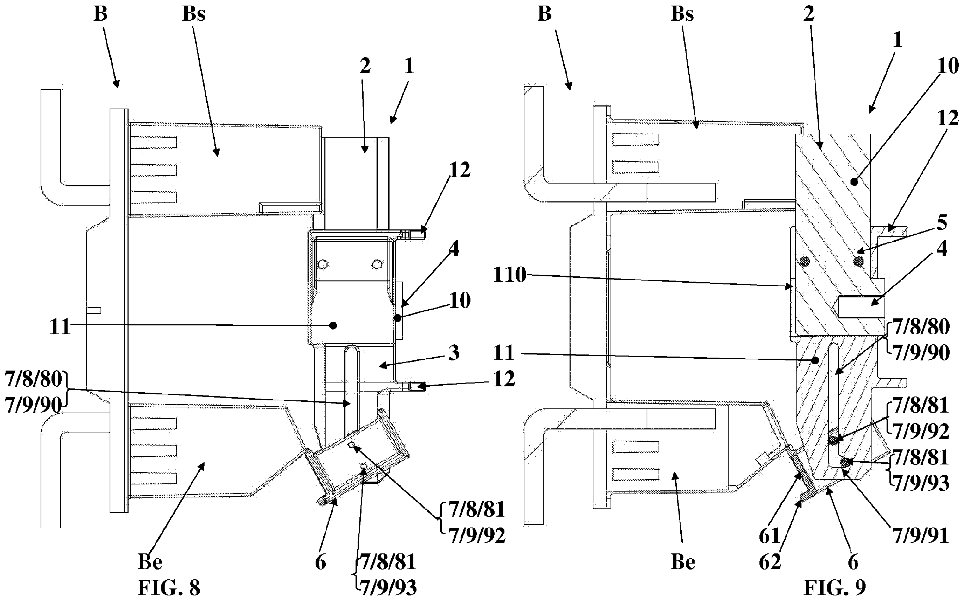

Ce faux fusible 1 comporte, alors également, des moyens de montage en déplacement 7 pour monter le détrompeur 6 en déplacement entre, d'une part, au moins une position active du détrompeur 6 dans laquelle ce détrompeur 6 empêche la coopération du faux fusible 1 avec le bornier B (figures 2, 3, 6 à 9) et, d'autre part, au moins une position inactive du détrompeur 6 dans laquelle ce détrompeur 6 autorise la coopération du faux fusible 1 avec le bornier B (figures 1, 4 et 5) .

En fait, ces moyens de montage en déplacement 7 comportent des moyens de montage en coulissement 8 du détrompeur 6 par rapport au connecteur conducteur 2 ou (et de préférence) au connecteur isolant 3.

Tel que visible sur les figures en annexe, ces moyens de montage en coulissement 8 comportent, d'une part, une coulisse longitudinale 80, que comporte le connecteur conducteur 2 ou (et de préférence) le connecteur isolant 3, et qui s'étend longitudinalement par rapport à ce connecteur (2 ; 3) et, d'autre part, au moins un coulisseau 81, que comporte le détrompeur 6, et qui est mobile à l'intérieur de la coulisse longitudinale 80.

On observera que ladite coulisse longitudinale 80 est sensiblement rectiligne.

En fait, selon un mode de réalisation préféré, cette coulisse longitudinale 80 est constituée par une lumière traversant le connecteur conducteur 2 ou (et de préférence) le connecteur isolant 3 tandis que le ou les coulisseaux 81 sont constitués par une goupille s'étendant à l'intérieur ou (et de préférence) au travers d'une telle lumière.

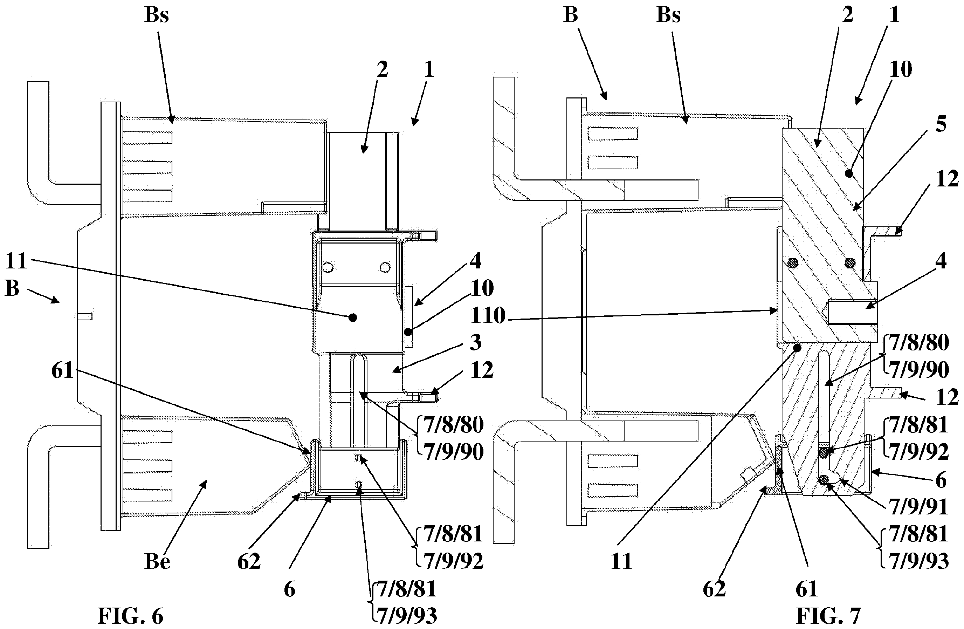

On observera que, par l'intermédiaire de ces moyens de montage en coulissement 8, le détrompeur 6 peut adopter une position active (notamment à partir d'une position inactive) dans laquelle ce détrompeur 6 empêche la coopération du faux fusible 1 avec le bornier B (figures 2, 6 et 7), plus particulièrement en empêchant l'insertion du connecteur (conducteur 2 ou, et de préférence, isolant 3), comportant le détrompeur 6, à l'intérieur de la borne (de sortie Bs ou, et de préférence, d'entrée Be) du bornier B (figures 6 et 7). Il en découle une mise en sécurité de l'opérateur.

De manière alternative ou (et de préférence additionnelle), les moyens de montage en déplacement 7 comportent des moyens de montage en basculement 9 du détrompeur 6 par rapport au connecteur conducteur 2 ou (et de préférence) au connecteur isolant 3.

De tels moyens de montage en basculement 9 comportent, d'une part, une coulisse longitudinale 90, que comporte le connecteur conducteur 2 ou (et de préférence) le connecteur isolant 3, et qui s'étend longitudinalement par rapport à ce connecteur (2 ; 3), d'autre part, une coulisse transversale 91, que comporte le connecteur conducteur 2 ou (et de préférence) le connecteur isolant 3, qui s'étend transversalement par rapport à ce connecteur (2 ; 3) ainsi que latéralement à partir de la coulisse longitudinale 90 et dans le prolongement de cette coulisse longitudinale 90, notamment à partir de l'extrémité de cette coulisse longitudinale 90. Ces moyens de montage en basculement 9 comportent, d'autre part encore, un coulisseau 92, que comporte le détrompeur 6 et qui est mobile à l'intérieur de la coulisse longitudinale 90 ainsi qu'un autre coulisseau 93, que comporte le détrompeur 6, et qui est mobile à l'intérieur de la coulisse longitudinale 90 et de la coulisse transversale 91.

On observera que ladite coulisse longitudinale 90 est sensiblement rectiligne.

Cette coulisse longitudinale 90, voire la coulisse transversale 91, sont constituées par une lumière traversant le connecteur conducteur 2 ou (et de préférence) le connecteur isolant 3 tandis que le ou les coulisseaux (92 ; 93) sont constitués par une goupille s'étendant à l'intérieur ou (et de préférence) au travers d'une telle lumière.

Selon un mode de réalisation préféré, les moyens de montage en déplacement 7 comportent des moyens de montage en coulissement 8 ainsi que des moyens de montage en basculement 9. Dans ce cas, la coulisse longitudinale 80 des moyens de montage en coulissement 8 constitue la coulisse longitudinale 90 des moyens de montage en basculement 9.

On observera que, par l'intermédiaire de ces moyens de montage en basculement 9, le détrompeur 6 peut adopter une position active (notamment à partir d'une position inactive) autre que la position active mentionnée ci-dessus pour les seuls moyens de montage en coulissement 8 (illustrée figures 2, 6 et 7). Dans cette autre position active (illustrée figures 3, 8 et 9), d'une part, ce détrompeur 6 empêche la coopération du faux fusible 1 avec le bornier B, plus particulièrement en empêchant l'insertion du connecteur (conducteur 2 ou, et de préférence, isolant 3), comportant le détrompeur 6, à l'intérieur de la borne (de sortie Bs ou, et de préférence, d'entrée Be) du bornier B et, d'autre part, ce détrompeur 6 est bloqué en coulissement par rapport au connecteur (conducteur 2 ou, et de préférence, isolant 3) de ce faux fusible 1.

On observera que cette autre position active du détrompeur 6 peut être adoptée sous l'effet d'une action d'un opérateur visant à forcer la coopération entre le faux fusible 1 et le bornier B alors que ce faux fusible 1 adopte déjà une position active telle que mentionnée ci-dessus et telle qu'illustrée figures 2, 6 et 7.

Quoiqu'il en soit, dans cette autre position active, il en découle, également, une mise en sécurité de l'opérateur.

Une autre caractéristique consiste en ce que le faux fusible 1 comporte des moyens d'entraînement pour entraîner le détrompeur 6 en déplacement entre au moins la position inactive et au moins la position active, respectivement entre au moins la position active et au moins la position inactive, de ce détrompeur 6.

En particulier, ces moyens d'entraînement sont configurés pour entraîner ledit détrompeur 6 entre la position inactive et la position active, entre la position active et l'autre position active, et/ou entre la position inactive et l'autre position active.

En fait, ces moyens d'entraînement en déplacement sont configurés pour assurer en entraînement en coulissement ou un entraînement en coulissement et en basculement du détrompeur 6.

Selon un mode de réalisation préféré, ces moyens d'entraînement en déplacement sont configurés pour assurer un tel entraînement sous l'effet de la gravité.

En ce qui concerne, plus particulièrement, le détrompeur 6, celui-ci comporte deux branches parallèles (60 ; 60'), entretoisées, et positionnées de part et d'autre du connecteur conducteur 2 ou (et de préférence) du connecteur isolant 3.

En fait, ce détrompeur 6 est constitué par un cavalier, adoptant une forme en « U », comportant les deux branches parallèles (60 ; 60') ainsi qu'une portion de raccordement 61 de ces deux branches parallèles (60 ; 60'), et positionné à cheval par-dessus le connecteur conducteur 2 ou (et de préférence) par-dessus le connecteur isolant 3.

Tel que mentionné ci-dessus, le faux fusible 1 comporte des moyens d'entraînement en déplacement. A ce propos, on observera que ce faux fusible 1 comporte, alors plus particulièrement, des moyens d'entrainement en basculement sous l'effet de la gravité qui sont constitués par la portion de raccordement 61 des deux branches parallèles (60 ; 60') du détrompeur 6, voire encore par une masselotte 62 associée à cette portion de raccordement 61.

Tel que mentionné ci-dessus, le détrompeur 6 comporte au moins un coulisseau (81, 92, 93). Un tel coulisseau (81, 92, 93) est solidaire des deux branches parallèles (60 ; 60') du détrompeur 6, constitue des moyens pour entretoiser ces deux branches parallèles (60 ; 60'), et s'étend entre ces deux branches (60 ; 60') ainsi qu'au travers de la ou des coulisses (80, 90, 91), plus particulièrement au travers des lumières constituant ces coulisses (80, 90, 91).

Une caractéristique additionnelle consiste en ce que le détrompeur 6 peut comporter un organe d'accrochage configuré pour s'accrocher sur une borne (plus particulièrement sur la borne d'entrée Be) du bornier B. La présence de cet organe d'accrochage permet, avantageusement et sous l'effet d'une manipulation du faux fusible 1 (notamment lorsqu'un opérateur tente de forcer la coopération entre ce faux fusible 1 et le bornier B), au détrompeur 6 de s'accrocher sur la borne ce qui provoque le basculement de ce détrompeur 6, même si le faux fusible 1 (notamment les moyens de montage en déplacement 7) est usé ou grippé. En fait, un tel organe d'accrochage peut être constitué par une nervure équipant ce détrompeur 6. Un mode particulier de réalisation consiste en ce que cette nervure est constituée par ladite masselotte 62 associée à ladite portion de raccordement 61.

Finalement et en ce qui concerne ce détrompeur 6, celui-ci est réalisé en un matériau isolant électrique.

Une autre caractéristique du faux fusible 1 consiste en ce qu'il comporte, d'une part, une pièce conductrice 10, réalisée un matériau conducteur électrique, et comportant au moins le connecteur conducteur 2 ainsi que les moyens de réception 4 des moyens de raccordement, voire encore les moyens de liaison 5. D'autre part, ce faux fusible 1 comporte une pièce isolante 11, réalisée en un matériau isolant, et comportant le connecteur isolant 3 ainsi qu'un berceau de réception 110 pour recevoir au moins une partie de la pièce conductrice 10.

En fait, ce berceau de réception 110 est configuré pour recevoir au moins les moyens de réception 4, voire encore les moyens de liaison 5 mentionnés ci-dessus.

Une autre caractéristique consiste en ce que ladite pièce conductrice 9 et/ou ladite pièce isolante 11 sont monobloc et/ou peuvent être réalisées par moulage.

Finalement, le faux fusible 1 comporte des moyens de collaboration 12 configurés pour collaborer avec un outil d'extraction (non représenté), ceci pour extraire le faux fusible 1 hors du bornier B de l'armoire électrique après une intervention sur l'installation.

L'invention concerne, aussi, un ensemble comportant, d'une part, au moins un bornier B (présentant les caractéristiques décrites ci-dessus) et, d'autre part, au moins un faux fusible 1, présentant les caractéristiques décrites ci-dessus et, chacun, configuré pour coopérer avec un des borniers B.

## Revendications

1. Faux fusible (1), destiné à coopérer avec un bornier (B) d'une armoire électrique, et comportant :
- un connecteur conducteur (2), réalisé en un matériau conducteur électrique, destiné à coopérer avec une borne (Be) du bornier (B) de l'armoire électrique ;
- un connecteur isolant (3), réalisé en un matériau isolant électrique, destiné à coopérer avec une autre borne (Bs) du bornier (B) de l'armoire électrique ;
- des moyens de réception (4), réalisés en un matériau conducteur électrique, et configurés pour recevoir des moyens de raccordement pour raccorder le faux fusible (1) à la terre ;
- des moyens de liaison (5) pour relier électriquement le connecteur conducteur (2) et les moyens de réception (4) ;
- un détrompeur (6) configuré pour empêcher la coopération entre le faux fusible (1) et le bornier (B) ;
- des moyens de montage en déplacement (7) pour monter le détrompeur (6) en déplacement entre, d'une part, au moins une position active du détrompeur (6) dans laquelle ce détrompeur (6) empêche la coopération du faux fusible (1) avec le bornier (B) et, d'autre part, au moins une position inactive du détrompeur (6) dans laquelle ce détrompeur (6) autorise la coopération du faux fusible (1) avec le bornier (B),
- **caractérisé par le fait qu'**il comporte, encore, des moyens d'entraînement pour entraîner le détrompeur (6) en déplacement entre au moins la position inactive et au moins la position active, respectivement entre au moins la position active et au moins la position inactive, de ce détrompeur (6), ceci sous l'effet de la gravité.

2. Faux fusible (1) selon la revendication 1, **caractérisé par le fait que** les moyens de montage en déplacement (7) comportent des moyens de montage en coulissement (8) du détrompeur (6) par rapport au connecteur conducteur (2) ou au connecteur isolant (3).

3. Faux fusible (1) selon la revendication 2, **caractérisé par le fait que** les moyens de montage en coulissement (8) comportent, d'une part, une coulisse longitudinale (80), que comporte le connecteur conducteur (2) ou le connecteur isolant (3), et qui s'étend longitudinalement par rapport à ce connecteur (2 ; 3) et, d'autre part, au moins un coulisseau (81), que comporte le détrompeur (6), et qui est mobile à l'intérieur de la coulisse longitudinale (80).

4. Faux fusible (1) selon l'une quelconque des revendications précédentes, **caractérisé par le fait que** les moyens de montage en déplacement (7) comportent des moyens de montage en basculement (9) du détrompeur (6) par rapport au connecteur conducteur (2) ou au connecteur isolant (3).

5. Faux fusible (1) selon la revendication 4, **caractérisé par le fait que** les moyens de montage en basculement (9) comportent, d'une part, une coulisse longitudinale (90), que comporte le connecteur conducteur (2) ou le connecteur isolant (3), et qui s'étend longitudinalement par rapport à ce connecteur (2 ; 3), d'autre part, une coulisse transversale (91), que comporte le connecteur conducteur (2) ou le connecteur isolant (3), qui s'étend transversalement par rapport à ce connecteur (2 ; 3) ainsi que latéralement à partir de la coulisse longitudinale (90) et dans le prolongement de cette coulisse longitudinale (90) et, d'autre part encore, un coulisseau (92), que comporte le détrompeur (6) et qui est mobile à l'intérieur de la coulisse longitudinale (90) ainsi qu'un autre coulisseau (93), que comporte le détrompeur (6), et qui est mobile à l'intérieur de la coulisse longitudinale (90) et de la coulisse transversale (91).

6. Faux fusible (1) selon l'une quelconque des revendications 3 ou 5, **caractérisé par le fait que** la coulisse longitudinale (90), voire la coulisse transversale (91), sont constituées par une lumière traversant le connecteur conducteur (2) ou le connecteur isolant (3) tandis que le ou les coulisseaux (92 ; 93) sont constitués par une goupille s'étendant à l'intérieur ou au travers d'une telle lumière.

7. Faux fusible (1) selon l'une quelconque des revendications précédentes, **caractérisé par le fait que** le détrompeur (6) comporte deux branches parallèles (60 ; 60'), entretoisées, et positionnées de part et d'autre du connecteur conducteur (2) ou du connecteur isolant (3).

8. Faux fusible (1) selon l'une quelconque des revendications précédentes, **caractérisé par le fait que** le détrompeur (6) est réalisé en un matériau isolant électrique.

9. Faux fusible (1) selon l'une quelconque des revendications précédentes, **caractérisé par le fait que** les moyens de réception (4) sont constitués par un orifice taraudé, notamment que comporte une douille.

10. Faux fusible (1) selon l'une quelconque des revendications précédentes, **caractérisé par le fait qu'**il comporte, d'une part, une pièce conductrice (10), réalisée un matériau conducteur électrique, et comportant au moins le connecteur conducteur (2) ainsi que les moyens de réception (4) des moyens de raccordement et, d'autre part, une pièce isolante (11), réalisée en un matériau isolant, et comportant le connecteur isolant (3) ainsi qu'un berceau de réception (110) pour recevoir au moins une partie de la pièce conductrice (10).

11. Ensemble comportant, d'une part, au moins un bornier (B) et, d'autre part, au moins un faux fusible (1), conforme à l'une quelconque des revendications précédentes, chacun conçu pour coopérer avec un des borniers (B).

## Patentansprüche

1. Falsche Sicherung (1), die dazu bestimmt ist, mit einem Klemmenblock (B) eines Schaltschranks zusammenzuwirken, und Folgendes umfasst:
- einen leitenden Verbinder (2), der aus einem elektrisch leitenden Material hergestellt und dazu bestimmt ist, mit einer Klemme (Be) des Klemmenblocks (B) des Schaltschranks zusammenzuwirken;
- einen isolierenden Verbinder (3), der aus einem elektrischen Isoliermaterial hergestellt und dazu bestimmt ist, mit einer anderen Klemme (Bs) des Klemmenblocks (B) des Schaltschranks zusammenzuwirken;
- Aufnahmemittel (4), die aus einem elektrisch leitenden Material hergestellt und konfiguriert sind, um Verbindungsmittel zum Verbinden der falschen Sicherung (1) mit der Erde aufnehmen;
- Verbindungsmittel (5) zum elektrischen Verbinden des leitenden Verbinders (2) und der Aufnahmemittel (4);
- ein Codiersystem (6), das konfiguriert ist, um die Zusammenwirkung zwischen der falschen Sicherung (1) und dem Klemmenblock (B) zu verhindern;
- Mittel zur verschiebbaren Lagerung (7), um das Codiersystem (6) verschiebbar zu montieren zwischen einerseits mindestens einer aktiven Position des Codiersystems (6), in der dieses Codiersystem (6) die Zusammenwirkung der falschen Sicherung (1) mit dem Klemmenblock (B) verhindert, und andererseits mindestens einer inaktiven Position des Codiersystems (6), in der dieses Codiersystem (6) die Zusammenwirkung der falschen Sicherung (1) mit dem Klemmenblock (B) gestattet,
- **dadurch gekennzeichnet, dass** sie auch Antriebsmittel zum Antreiben des Codiersystems (6) in Verschiebung zwischen mindestens der inaktiven Position und mindestens der aktiven Position, bzw. zwischen mindestens der aktiven Position und mindestens der inaktiven Position dieses Codiersystems (6) umfasst, und zwar unter dem Einfluss der Schwerkraft.

2. Falsche Sicherung (1) nach Anspruch 1, **dadurch gekennzeichnet, dass** die Mittel zur verschiebbaren Lagerung (7) Mittel zur gleitbaren Lagerung (8) des Codiersystems (6) relativ zu dem leitenden Verbinder (2) oder dem isolierenden Verbinder umfassen (3).

3. Falsche Sicherung (1) nach Anspruch 2, **dadurch gekennzeichnet, dass** die Mittel zur gleitbaren Lagerung (8) einerseits eine Längsführungsnut (80), welche der leitende Verbinder (2) oder der isolierende Verbinder (3) umfasst, die sich in Längsrichtung in Bezug auf diesen Verbinder (2 ; 3) erstreckt, und andererseits mindestens einen Schieber (81) umfassen, welchen das Codiersystem (6) umfasst, und der innerhalb der Längsführungsnut (80) beweglich ist.

4. Falsche Sicherung (1) gemäß irgendeinem der vorhergehenden Ansprüche, **dadurch gekennzeichnet, dass** die Mittel zur verschiebbaren Lagerung (7) Mittel zur kippbaren Montage (9) des Codiersystems (6) relativ zu dem leitenden Verbinder (2) oder zu dem isolierenden Verbinder (3) umfassen.

5. Falsche Sicherung (1) nach Anspruch 4, **dadurch gekennzeichnet, dass** die Mittel zur kippbaren Montage (9) einerseits eine Längsführungsnut (90), welche der leitende Verbinder (2) oder der isolierende Verbinder (3) umfasst, und die sich in Bezug auf diesen Verbinder (2 ; 3) in Längsrichtung erstreckt, andererseits eine Querführungsnut (91), welche der leitende Verbinder (2) oder der isolierende Verbinder (3) umfasst, und die sich quer relativ zu diesem Verbinder (2 ; 3) sowie seitlich ab der Längsführungsnut (90) und in der Verlängerung dieser Längsführungsnut (90) erstreckt und noch andererseits einen Schieber (92), welchen das Codiersystem (6) umfasst, und der innerhalb der Längsführungsnut (90) beweglich ist, sowie einen weiteren Schieber (93), welchen das Codiersystem (6) umfasst, und der innerhalb der Längsführungsnut (90) und der Querführungsnut (91) beweglich ist, umfassen.

6. Falsche Sicherung (1) nach irgendeinem der Ansprüche 3 oder 5, **dadurch gekennzeichnet, dass** die Längsführungsnut (90), sogar die Querführungsnut (91), aus einer Bohrung besteht, die den leitenden Verbinder (2) oder den isolierenden Verbinder (3) durchsetzt, während der oder die Schieber (92 ; 93) aus einem Stift bestehen, der sich innerhalb einer oder durch eine solche Bohrung hindurch erstreckt.

7. Falsche Sicherung (1) nach irgendeinem der vorhergehenden Ansprüche, **dadurch gekennzeichnet, dass** das Codiersystem (6) zwei parallele Schenkel (60 ; 60') umfasst, die verstrebt und beiderseits des leitenden Verbinders (2) oder des isolierenden Verbinders (3) positioniert sind.

8. Falsche Sicherung (1) nach irgendeinem der vorhergehenden Ansprüche, **dadurch gekennzeichnet, dass** das Codiersystem (6) aus einem elektrischen Isoliermaterial hergestellt ist.

9. Falsche Sicherung (1) nach irgendeinem der vorhergehenden Ansprüche, **dadurch gekennzeichnet, dass** die Aufnahmemittel (4) aus einer Gewindeöffnung, nämlich welche eine Büchse umfasst, bestehen.

10. Falsche Sicherung (1) nach irgendeinem der vorhergehenden Ansprüche, **dadurch gekennzeichnet, dass** sie einerseits ein leitendes Teil (10), das aus einem elektrisch leitenden Material hergestellt ist und mindestens den leitenden Verbinder (2) sowie die Aufnahmemittel (4) der Verbindungsmittel umfasst, und andererseits ein isolierendes Teil (11) umfasst, das aus einem Isoliermaterial hergestellt ist und das den isolierenden Verbinder (3) sowie eine Aufnahmemulde (110) zum Aufnehmen von mindestens einem Teil des leitenden Teils (10) umfasst.

11. Baugruppe, die einerseits mindestens einen Klemmenblock (B) und andererseits mindestens eine falsche Sicherung (1) nach irgendeinem der vorhergehenden Ansprüche umfasst, die jeweils zum Zusammenwirken mit einem der Klemmenblöcke (B) ausgelegt sind.

## Claims

1. False fuse (1), intended to cooperate with a terminal block (B) of an electrical cabinet, and including:
- a conductive connector (2), made of an electrically conductive material, intended to cooperate with a terminal (Be) of the terminal block (B) of the electrical cabinet;
- an insulating connector (3), made of an electrical insulating material, intended to cooperate with another terminal (Bs) of the terminal block (B) of the electrical cabinet;
- receiving means (4), made of an electrically conductive material, and configured to receive connecting means for connecting the false fuse (1) to the ground;
- connecting means (5) for electrically connecting the conductive connector (2) and the receiving means (4);
- a coding system (6) configured to prevent the cooperation between the false fuse (1) and the terminal block (B);
- means for movably mounting (7) for mounting the coding system (6) movably between, on the one hand, at least one active position of the coding system (6) in which this coding system (6) prevents the cooperation of the false fuse (1) with the terminal block (B) and, on the other hand, at least one inactive position of the coding system (6) in which this coding system (6) authorizes the cooperation of the false fuse (1) with the terminal block (B),
- wherein it also includes driving means for driving the coding system (6) movably between at least the inactive position and at least the active position, respectively between at least the active position and at least the inactive position, of this coding system (6), under the action of gravity.

2. False fuse (1) according to claim 1, wherein the means for movably mounting (7) include means for mounting (8) the coding system (6) slidably with respect to the conductive connector (2) or to the insulating connector (3).

3. False fuse (1) according to claim 2, wherein the means for movably mounting (8) include, on the one hand, a longitudinal slide (80), which the conductive connector (2) or the insulating connector (3) includes, and which extends longitudinally with respect to this connector (2 ; 3) and, on the other hand, at least one slide (81), which the coding system (6) includes, and which is movable inside the longitudinal slide (80).

4. False fuse (1) according to any one of the preceding claims, wherein the means for movably mounting (7) include means for swingably mounting (9) the coding system (6) relative to the conductive connector (2) or to the insulating connector (3).

5. False fuse (1) according to claim 4, wherein the means for swingably mounting (9) include, on the one hand, a longitudinal slide (90), which the conductive connector (2) or the insulating connector (3) includes, and which extends longitudinally with respect to this connector (2 ; 3), on the other hand, a transverse slide (91), which the conductive connector (2) or the insulating connector (3) includes, which extends transversely relative to this connector (2 ; 3) as well as laterally from the longitudinal slide (90) and in the extension of this longitudinal slide (90) and, on the other hand, a slide (92), which the coding system (6) includes, and which is movable inside the longitudinal slide (90), as well as another slide (93), which the coding system (6) includes, and which is movable inside the longitudinal slide (90) and the transverse slide (91).

6. False fuse (1) according to any one of claims 3 or 5, wherein the longitudinal slide (90), even the transverse slide (91), consists of a lumen passing through the conductive connector (2) or the insulating connector (3), while the slide or slides (92; 93) consist of a pin extending inside or through such a lumen.

7. False fuse (1) according to any one of the preceding claims, wherein the coding system (6) includes two braced parallel branches (60 ; 60') positioned on either side of the conductive connector (2) or the insulating connector (3).

8. False fuse (1) according to any one of the preceding claims, wherein the coding system (6) is made of an electrical insulating material.

9. False fuse (1) according to any one of the preceding claims, wherein the receiving means (4) consist of a threaded orifice, namely which a socket includes.

10. False fuse (1) according to any one of the preceding claims, wherein it includes, on the one hand, a conductive part (10), made of an electrically conductive material, and including at least the conductive connector (2) as well as the means for receiving (4) the connecting means and, on the other hand, an insulating part (11), made of an insulating material, and including the insulating connector (3) as well as a receiving cradle (110) for receiving at least a portion of the conductive part (10).

11. Assembly including, on the one hand, at least one terminal block (B) and, on the other hand, at least one false fuse (1) according to any one of the preceding claims, each designed to cooperate with one of the terminal blocks (B).
